# EUROPEAN PATENT APPLICATION

(11) **EP 4 023 691 A1**
(43) Date of publication of application: **06.07.2022**
(21) Application number: 20858059.7
(22) Date of filing: 25.08.2020
(51) Int. Cl.: C08G 10/02, C09J 9/02, C08L 61/18, C08L 101/00, C09J 133/00, C09J 165/00, C09J 201/00, G02B 5/30, C09J 7/10, C09J 7/38, G02F 1/1333

(54) **ELECTRICALLY CONDUCTIVE POLYMER AND RESIN COMPOSITION**

(30) Priority: 30.08.2019 JP 2019159027
(71) Applicant: Soken Chemical & Engineering Co., Ltd., Toshima-ku Tokyo 171-8531 (JP)
(72) Inventor: MIYAZAKI, Tomohiro, Sayama-shi, Saitama 350-1320 (JP); KONNO, Yuta, Sayama-shi, Saitama 350-1320 (JP); MIYAMOTO, Takeshi, Sayama-shi, Saitama 350-1320 (JP); KINOSHITA, Naoto, Sayama-shi, Saitama 350-1320 (JP)
(74) Representative: Gulde & Partner
(86) International application number: PCT/JP2020/032030
(87) International publication number: WO 2021/039790

(57) **Abstract**

A conductive polymer that has excellent dispersibility in a base resin and can impart high conductivity is provided.

According to the present invention, a conductive polymer comprising at least one of structural units represented by general formula (1) and (2).

## Description

### TECHNICAL FIELD

The present invention relates to a conductive polymer and a resin composition.

### Background Art

Patent Literature 1 discloses a conductive polymer dispersion that contains a conductive composite containing a π-conjugated conductive polymer and a polyanion, an acrylic adhesive, and an organic solvent, and in which an epoxy compound having one or more epoxy groups in one molecule reacts with some anion groups of the polyanion to form an ester. This provides a conductive polymer dispersion solution in which the conductive composite is highly dispersed to easily form a conductive adhesive layer having high conductivity and heat resistance, solving the problem.

### CITATION LIST

### PATENT LITERATURE

Patent Literature 1: JP2019-8912

### SUMMARY OF INVENTION

### TECHNICAL PROBLEM

However, there is a need to further improve the dispersibility and conductivity.

The present invention has been made in view of such circumstances, and provides a conductive polymer that has excellent dispersibility in a base resin and can impart high conductivity.

### SOLUTION TO PROBLEM

According to the present invention, a conductive polymer comprising at least one of structural units represented by general formula (1) and (2) is provided.

The conductive polymer of the present invention has excellent dispersibility in variety of base resins. In addition, when the conductive polymer of the present invention is blended with the base resin, a resin composition with excellent conductivity can be obtained.

### MODE FOR CARRYING OUT THE INVENTION

The embodiments of the present invention will be described in detail as below.

### 1. Resin Composition

The resin composition of one embodiment of the present invention includes a base resin and a conductive polymer. The conductive polymer of the present invention has excellent dispersibility and conductivity in the base resin, and the resin composition can be used, for example, as an adhesive composition for optics. The adhesive composition for optics can be used, for example, for bonding a liquid crystal cell and a polarizing film that constitute an in-cell or on-cell touch panel type input/output device.

Each component is described in detail below.

### 1-1. Base Resin

Examples of the base resin can include any resin that can disperse the conductive polymer of the present invention, for example, acrylic resins, rubber-based resins, urethane resins, silicone, olefin resins, and polyester resins. Examples of a method of curing can include heat curing and light curing.

The acrylic resin is a resin that contains a repeating structure comprising a (meth)acrylic unit structure. The (meth)acrylic unit structure includes the unit structure derived from a (meth)acrylic acid ester.

Specific examples of the monomer constituting the acrylic resin include:
carboxyl group-containing (meth) acrylates such as (meth) acrylic acid, β-carboxyethyl (meth) acrylate, β-carboxyethyl (meth) acrylic acid, 5-carboxypentyl (meth) acrylic acid, succinic acid mono (meth) acryloyloxyethyl ester and ω-carboxypolycaprolactone mono (meth) acrylate;
hydroxyl group-containing (meth) acrylates such as 2-hydroxyethyl (meth) acrylate, 3-hydroxypropyl (meth) acrylate, 4- hydroxyl butyl (meth) acrylates, 6-hydroxyhexyl (meth) acrylate and 8-hydroxyoctyl (meth) acrylate;
amino group-containing (meth) acrylates such as dimethylaminoethyl (meth) acrylates and diethylaminoethyl (meth) acrylates;
(meth) acrylamide, N-methyl (meth) acrylamide, N-ethyl (meth) acrylamide, N-propyl (meth) acrylamide, N-hexyl (meth) acrylamide and (dimethylamino) ethyl (meth) acrylate;
vinylpyrrolidone, acryloylmorpholine, vinylcaprolactam, methyl (meth) acrylate, ethyl methacrylate, propyl (meth) acrylate, i-propyl methacrylate, n-butyl methacrylate, isobutyl methacrylate, t-butyl (meth) acrylate, pentyl acrylate, cyclohexyl (meth) acrylate, isobornyl (meth) acrylate, tetradecyl acrylate, hexadecyl (meth) acrylate and stearyl (meth) acrylate;
(meth) acrylic monomers having an alkylene oxide group;
(meth) acrylic monomers having an alkoxysilane group such as 3- (meth) acryloxypropylmethyldimethoxysilane, 3- (meth) acryloxypropyltrimethoxysilane, 3- (meth) acryloxypropylmethyldiethoxysilane, 3- (meth) acryloxypropyltriethoxysilane. Further, polyether di (meth) acrylates such as polyethylene glycol di (meth) acrylates, tri (meth) acrylates such as trimethylolpropane tri (meth) acrylates and ethylene glycol modified products thereof, polyfunctional (meth) acrylates such as dipentaerythritol hexa (meth) acrylate and pentaerythritol tetra (meth) acrylates, may also be used. These monomers may be used alone, or two or more of these can be used in combination.

When using an acrylic acid alkyl ester as the main monomer in the adhesive composition for optics, a monomer containing an alkyl chain having 4 or less carbon atoms or an alkylene glycol unit is preferably used in an amount of 30% by mass or more with respect to the total amount of the monomer charged. This enhances polar of the adhesive and improves the compatibility with the conductive polymer of the present invention, resulting in good dispersibility and conductivity. In other words, the conductive polymer of the present invention can be preferably used for adhesive composition for optics, especially for bonding a liquid crystal cell and a polarizing film that constitute an in-cell or on-cell touch panel type input/output device

Examples of the rubber-based resin include a rubber-based resin composition using natural rubber or synthetic rubber as the base polymer, for example, resins obtained from a mixture of a hydrogenated block copolymer, a first compatibilizer, and a second compatibilizer.

The block copolymer is a thermoplastic elastomer having a hard segment comprising a polymeric component of an aromatic vinyl monomer and a soft segment comprising a polymeric component of a conjugated diene monomer. Here, more specifically, the aromatic vinyl compound is preferably styrene and α-methylstyrene (more preferably styrene), and the conjugated diene compound is preferably butadiene and isoprene.

Specific examples of the component include, for example, styrene- (ethylene-propylene) -styrene type block copolymer (SEPS) (hydrogenated product of styrene-isoprene-styrene type block copolymer (SIS)), hydrogenated product of styrene- (butadiene -butylene) -styrene type block copolymer (SBBS), styrene- (ethylene-butylene) -styrene type block copolymer (SEBS) (hydrogenated product of styrene-butadiene-styrene type block copolymer (SBS)), styrene-(ethylene-propylene) type block copolymer (SEP) (hydrogen product of styrene-isoprene type block copolymer (SI)), styrene- (ethylene-butylene) type block copolymer (SEB) (hydrogenated product of styrene-butadiene type block copolymer (SB)) and the like. Among them, from the viewpoint of excellent compatibility with the first compatibilizer, the hydrogenated block copolymer is preferably an ABA-type hydrogenated block copolymer such as styrene- (ethylene-propylene) -styrene type block copolymer (SEPS) and styrene- (ethylene- butylene) -styrene-type block copolymer (SEBS). These may be used alone, or two or more kinds thereof may be used in combination.

The first compatibilizer is compatible with the hard segment constituting the hydrogenated block copolymer.

The first compatibilizer can be, for example, an aromatic tackifier resin. The aromatic tackifier resin used as the first compatibilizer preferably have a molecular weight of 5,000 or less in view of compatibility.
Examples of the aromatic tackifier resin that can be used as the first compatibilizer include, for example, aromatic petroleum resins, styrene-based polymers, α-methylstyrene-based polymers, styrene-(a-methylstyrene)-based copolymers, styrene-aliphatic hydrocarbon-based copolymers, styrene-(a-methylstyrene)-aliphatic hydrocarbon-based copolymers, and styrene-aromatic hydrocarbon-based copolymers. More specifically, for example, commercially available styrene-aromatic hydrocarbon-based copolymers such as FMR-0150 (softening point 145°C, manufactured by Mitsui Chemicals, Inc.), styrene-aliphatic hydrocarbon-based copolymer such as FTR-6100 (softening point 100°C, manufactured by Mitsui Chemicals, Inc.), FTR-6110 (softening point 110°C, made by Mitsui Chemicals, Inc.) and FTR-6125 (softening point 125°C, made by Mitsui Chemicals, Inc.), styrene-(a-methylstyrene)-aliphatic hydrocarbon-based copolymer such as FTR-7100 (softening point 100°C, made by Mitsui Chemicals, Inc.), styrene-based polymer such as FTR-8120 (softening point 120°C, made by Mitsui Chemicals, Inc.) SX-100 (softening point 100°C, manufactured by YASUHARA CHEMICAL CO.,LTD.), α-methylstyrene-based polymer such as FTR-0100 (softening point 100°C, manufactured by Mitsui Chemicals, Inc.), styrene-(a-methylstyrene)-based copolymers such as FTR-2120 (softening point 120°C, made by Mitsui Chemicals, Inc.), FTR-2140 (softening point 145°C, made by Mitsui Chemicals, Inc.), Kristalex 3100 (softening point 100°C, Eastman Chemical Company), Kristalex 3085 (softening point 85°C, Eastman Chemical Company), Kristalex 5140 (softening point 140°C, Eastman Chemical Company), Kristalex 1120 (softening point 120°C, Eastman Chemical), Kristalex F85 (softening point 85°C, Eastman Chemical), Kristalex F100 (softening point 100°C, Eastman Chemical Company) and Kristalex F115 (softening point 115°C, made by Eastman Chemical Company) can be used.

The second compatibilizer is compatible with the soft segments constituting the hydrogenated block copolymer.

The second compatibilizer, can be a softener containing aliphatic hydrocarbons such as polybutene compounds, polyisobutylene compounds, and polyisoprene compounds. Examples of the softener that can be used as component (C) includes commercially available softeners such as polyisobutylene compounds such as Nisseki polybutene LV-7, LV-50, LV-100, HV-15, HV-35, HV-50, HV-100, HV-300, HV-1900 and SV-7000 (all manufactured by ENEOS Corporation), polyisobutylene compounds such as Tetrax 3T, 4T, 5T, 6T, Hi-Mole 4H, 5H, 5.5H and 6H (all ENEOS Corporation), and polyisoprene compounds including Kuraprene LIR-290 (manufactured by Kuraray Co., Ltd.).

The urethane resin is a resin having a urethane bond, and is produced, for example, by polyaddition of an isocyanate group and a compound having a hydroxyl group. The urethane resin that can be obtained by reacting a polyol compound with a polyisocyanate compound can be used. Among various urethane resins, an appropriate urethane resin which can function as adhesives, can be adopted and, more specifically, among ether-based polyurethanes, ester-based polyurethanes, carbonate-based polyurethanes, and the like, an appropriate urethane resin can be adopted.

Here, examples of the polyol compound include, for example, polyether polyols, polyester polyols, polyacetal polyols, polycarbonate polyols, polycaprolactone polyols. In view of the number of -OH groups, it may be diol compounds. Examples of the polyisocyanate compound include, for example, phenylene diisocyanate, diphenylmethane diisocyanate, tolylene diisocyanate, hexamethylene diisocyanate. Two or more of these components can be used to react.

The urethane resin preferably has a weight average molecular weight of 3,000 to 5,00,000, and more preferably 5,000 to 4,00,000, in view of providing adhesion at room temperature. By setting the weight average molecular weight to 3,000 or more, it is possible to suppress a significant decrease in the heat resistance performance of the resulting adhesive layer. By setting the weight average molecular weight to 500,000 or less, uniform spreading can be facilitated.

A silicone has an organopolysiloxane as a main chain. Various silicones that can function as adhesives can be used as the silicones, and they can be addition-reaction, peroxide-reaction, or condensation-reaction types. The silicone compounds that are generally used as silicone adhesives can be mentioned. As the aforementioned silicone compound, for example, the silicone compound that comprises a mixture or a reaction product of a copolymer having a unit of SiO₂ and a unit of (CH₃)₃SiO_{0.5} and a polydimethylsiloxane containing a silanol group as a main component is used, and if necessary, those in which the substituents of these siloxane units are substituted with a group other than a methyl group, for example, a phenyl group or a vinyl group are used. A catalyst may be added to the silicone to promote the cross-linking reaction to obtain an adhesive layer with the desired properties.

The olefin resin is a resin having a unit structure derived from olefin, and examples thereof include homopolymers and copolymers of, for example, α-olefin compounds such as ethylene, propylene, 1-butene, 1-hexene, 1-octene, trimethylsilylethylene, triethylsilylethylene, styrene, 4-methylstyrene, 2-methylstyrene and 4-ethylstyrene, and cycloolefin compounds such as 2-norbornene, 5-methyl-2-norbornene, 5-ethyl-2-norbornene, 5-butyl-2-norbornene, 5-hexyl-2-norbornene, 5-decyl-2-norbornene, 5-cyclohexyl-2-norbornene, 5-cyclopentyl-2-norbornene, 5-ethylidene-2-norbornene, 5-vinyl-2-norbornene, 5-propenyl-2-norbornene, 5-cyclohexenyl-2-norbornene, 5-cyclopentenyl-2-norbornene, and 5-phenyl-2-norbornene.

These may be used alone, or two or more of these may be used in combination. The weight average molecular weight of the olefin resin is preferably 5,000 or more and 500,000 or less, more preferably 10,000 or more and 200,000 or less. When the molecular weight is too large, the solubility in a solvent is lowered and the handleability is lowered. Therefore, it is preferable that the solution can be used as a solution of 10 to 30% by mass.

The polyester resin is a resin having an ester bond, and is produced, for example, by dehydration condensation of a polyvalent carboxylic acid and a polyol.

Examples of the polyvalent carboxylic acid include dicarboxylic acids and trivalent or higher polyvalent carboxylic acids. Examples of the dicarboxylic acid include aromatic dicarboxylic acids such as phthalic acid, isophthalic acid, and terephthalic acid and aliphatic dicarboxylic acids such as oxalic acid, malonic acid, citraconic acid, itaconic acid, glutaconic acid, succinic acid, adipic acid, sebacic acid, dodecanedioic acid and azelaic acid.

Examples of the polyol include aliphatic diols having 2 to 20 carbon atoms and trivalent or higher aliphatic alcohols such as glycerin.

Examples of the aliphatic diol include ethylene glycol, 1,2-propanediol, 1,3-propanediol, 1,4-butanediol, 1,5-pentanediol, 1,6-hexanediol, 1,4-butenediol, 1,3-butanediol, neopentyl glycol, 1,10-decanediol, 1,12-dodecanediol.

The weight average molecular weight of the polyester resin is preferably 5,000 to 500,000, and more preferably 10,000 to 300,000, from the viewpoint of exhibiting performance when coating various substrates. When the molecular weight is too large, the solubility in a solvent is lowered and the handleability is lowered. Therefore, it is preferable that the solution can be used as a solution of 10 to 30% by mass. Further, since it is preferable to use a method of dissolving the polyester resin in a solution to form a coating film, an amorphous polyester resin that is easily dissolved in a common solvent is preferable.

### 1-2. Conductive polymer

The conductive polymer of the present invention imparts conductivity to the resin composition and contributes to making the resin composition antistatic. This conductive polymer comprises at least one of the structural units represented by the general formula (1) and (2). Since the π-conjugated polymer contained in this conductive polymer has R¹, the dispersibility in the solvent is enhanced.

The blending amount of the conductive polymer in the resin composition is preferably 0.01 to 35 parts by mass, more preferably 0.05 to 30 parts by mass, and more preferably 0.5 to 20 parts by mass with respect to 100 parts by mass of the base resin. Specifically, the blending amount is, for example, 0.01, 0.05, 0.1, 0.5, 1, 2, 3, 4, 5, 6, 7, 8, 9, 10, 11, 12, 13, 14, 15, 20, 25, 30, 35 parts by mass, and may be within the range between any two of the numerical values exemplified here.

When R¹ contains a silicone group, the blending amount of the conductive polymer is preferably 0.01 to 20 parts by mass, more preferably 0.01 to 10 parts by mass with respect to 100 parts by mass of the base resin. By adjusting the ratio of the silicone group portion in R¹, it is possible to achieve both dispersibility and conductivity even when the blending amount is small.

When R¹ contains an alkyl group, the blending amount of the conductive polymer in the resin composition is preferably 0.01 to 35 parts by mass, more preferably 0.1 part by mass or more with respect to 100 parts by mass of the base resin.

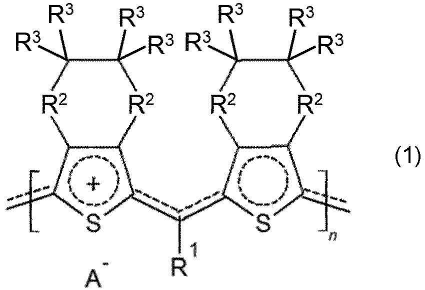

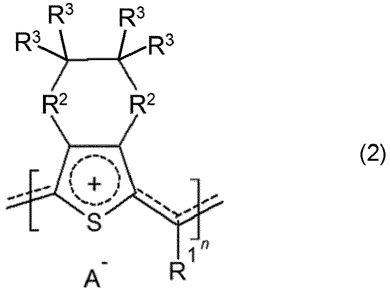

In the general formulas (1) and (2), R¹ is a group having an ester bond. Each of R² is an oxygen atom or a sulfur atom, and each of R³ is a hydrogen atom or an organic group. A⁻ is a monoanion derived from a dopant. n is 2 to 300.

R¹ preferably contains at least one of an alkyl group that optionally has a substituent and a silicone group, and preferably contains a silicone group. Since a silicone group has a low free energy, when R¹ contains a silicone group, the conductive polymer tends to gather near the surface in the resin composition, and the surface resistance tends to be reduced.

Examples of the alkyl group include an alkyl group having 1 to 12 carbon atoms. The alkyl group having 1 to 12 carbon atoms may be linear, branched, cyclic or the like, and may be, for example, an alkyl group 1 to 8 carbon atoms, 1 to 6 carbon atoms, 1 to 4 carbon atoms, or the like. Specifically, Examples of the alkyl group include a methyl group, an ethyl group, an n-propyl group, an isopropyl group, an n-butyl group, a t-butyl group, a cyclopentyl group, a cyclohexyl group, a bornyl group, an isobornyl group, a dicyclopentanyl group, an adamantyl group and the like.

The silicone group has a siloxane bond, in which silicon and oxygen are alternately bonded, as the main skeleton of the bond, and is a group in which an organic group is bonded to the siloxane bond. The organic group is preferably an aromatic group or an alkyl group having 1 to 12 carbon atoms, and a methyl group is preferable.

Examples of the ester bond of R¹ include a carboxylic acid ester bond, a phosphoric acid ester bond, a sulfonic acid ester bond, and the like, and a carboxylic acid ester bond is preferable. When R¹ has an acid group that has not been esterified (for example, a carboxyl group or the like), the polarity of the conductive polymer becomes too high, and the cohesiveness of the conductive polymer in the base resin becomes low. Esterification of the acid group lowers the polarity and improves dispersibility in the base resin.

R¹ preferably has the structure represented by the general formula (3).

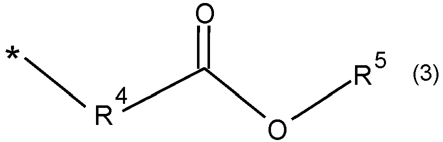

In general formula (3), * is the bonding part, R⁴ is a direct bond or an organic group, and R⁵ contains at least one of an organic group and a silicone group.

Examples of the organic group of R³, R⁴, and R⁵ include an alkyl group with 1 to 12 carbons, an alkyl ether group with 1 to 12 carbons, an alkoxy group with 1 to 12 carbons, an alkylene oxide group of 1 to 12 carbons, an aromatic group, and a heterocyclic group, which optionally have a substituent. R⁵ preferably has a hydroxyl group at the β-position.

The alkyl group with 1 to 12 carbon is as described above.

The alkyl ether group with 1 to 12 carbons can be linear, branched, cyclic, or the like and may be, for example, an alkyl ether group with 1 to 8 carbons, 1 to 6 carbons, 1 to 4 carbons, or the like.

The alkoxy group with 1 to 12 carbons can be linear, branched, cyclic, or the like and may be, for example, an alkoxy group with 1 to 8 carbons, 1 to 6 carbons, 1 to 4 carbons, or the like.

The alkylene oxide group with 1 to 12 carbons is an alkylene oxide group with 1 to 8 carbons, 1 to 6 carbons, 1 to 4 carbons, or the like.

Examples of the aromatic group include a phenyl group, a benzyl group, and various other condensed ring groups. Examples of the condensed ring group include naphthalene ring, azulene ring, anthracene ring, phenanthrene ring, pyrene ring, chrysene ring, naphthacene ring, triphenylene ring, acenaphthene ring, coronene ring, fluorene ring, fluoranthrene ring, pentacene ring, perylene ring, pentaphene ring, picene ring, pyranthrene ring, and the like.

Examples of the heterocyclic group include a monovalent group derived from silol ring, furan ring, thiophene ring, an oxazole ring, pyrrole ring, pyridine ring, pyridazine ring, pyrimidine ring, pyrazine ring, triazine ring, oxadiazole ring, triazole ring, imidazole ring, pyrazole. ring, thiazole ring, indole ring, benzimidazole ring, benzthiazole ring, benzoxazole ring, quinoxaline ring, quinazoline ring, phthalazine ring, thienothiophene ring, carbazole ring, azacarbazole ring (representing a structure in which any one or more of the carbon atoms constituting the carbazole ring has been replaced by a nitrogen atom), dibenzosilol ring, dibenzofuran ring, dibenzothiophene ring, ring in which any one or more of the carbon atoms constituting a benzothiophene or dibenzofuran ring has been replaced by a nitrogen atom, benzodifuran ring, benzodithiophene ring, aclysine ring, benzoquinoline ring, phenazine ring, phenanthridine ring, phenanthroline ring, cyclazine ring, kindrin ring, tepenidine ring, quinindrin ring, triphenodithiadin ring, triphenodioxazine ring, phenanthrazine ring, anthrazine ring, perimidine ring, naphthofuran ring, naphthothiophene ring, naphthodifuran ring, naphthodithiophene ring, anthrafran ring, anthradifuran ring, anthratiophene ring, anthradithiophene ring, thiantolene ring, phenoxatiin ring, dibenzocarbazole ring, indolocarbazole ring, dithienobenzene ring, epoxy ring, aziridine ring, thiirane ring, oxetane ring, azetidine ring, thietan ring, tetrahydrofuran ring, dioxolan ring, pyrrolidine ring, pyrazolidine ring, imidazolidine ring, oxazolidine ring, tetrahydrothiophene ring, sulforane ring, thiazolidine ring, ε-caprolactone ring, ε-caprolactam ring, piperidine ring, hexahydropyridazine ring, hexahydropyrimidine ring, piperazin ring, morpholin ring, tetrahydropyran ring, 1,3-dioxane ring, 1,4-dioxane ring, trioxane ring, tetrahydrothiopyran ring, thiomorpholin ring, thiomorpholin-1,1-dioxide ring, pyranose ring, diazabicyclo [2,2,2] -octane ring, phenoxazine ring, phenothiazine ring, oxanthrene ring, thioxanthene ring, and phenoxatiin ring.

Examples of the substituent include, for example, an alkyl group with 1 to 12 carbons, an alkyl ether group with 1 to 12 carbon, an alkoxy group with 1 to 12 carbons, an alkylene oxide group with 1 to 12 carbons, an aromatic group, a hydroxy group, a carboxyl group, a halogen such as fluorine, chlorine, bromine, and iodine, an aldehyde group, an amino group, and a cycloalkyl group with 3 to 8 carbons, and a hydroxy group and a carboxyl group are preferred.

Examples of the dopant include any compound that can impart conductivity to the π-conjugated polymer and become a monoanion. Examples of the dopant include sulfonic acids such as vinyl sulfonic acid, methanesulfonic acid, p-toluenesulfonic acid, dodecyl sulfonic acid, dodecylbenzenesulfonic acid, di(2-ethylhexyl)sulfosuccinic acid, monovalent acids such as tetrafluoroboric acid, and trifluoroacetic acid, hexafluorophosphoric acid, trifluoromethanesulfonimide, naphthalenesulfonic acid, and their alkali metal salts. The conductivity of the conductive polymer is easily improved by using dopants that become monoanions. The structure of the dopant affects the dispersibility in the base resin, and among these, dodecylbenzenesulfonic acid is preferred from the viewpoint of the balance conductivity and dispersibility.

The number of the structural units (1) and (2) contained in the conductive polymer is not particularly limited, but is preferably 2 to 300. Specifically, for example, it may be 2, 5, 10, 20, 30, 40, 50, 60, 70, 80, 90, 100, 200, 300, and may be within the range between any two of the numerical values exemplified here.

The content ratio of the structural units (1) and (2) contained in the conductive polymer can be adjusted by the ratio of the amount of thiophene derivative represented by general formula (4) and aldehyde added. The molar ratio of thiophene derivative to aldehyde added, thiophene derivative/aldehyde, is, for example, 1/1, 2/1, 3/1, 4/1, 5/1 and may be in the range between the two values exemplified herein. From the viewpoint of the balance between solubility and conductivity, the molar ratio is preferably 1/1 to 4/1 and more preferably 1/1 to 2/1.

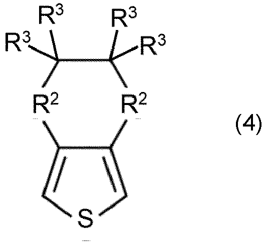

In general formula (4), R² and R³ are defined in the same way as R² and R³ in general formula (1) and (2), respectively.

The method of synthesizing the conductive polymer is not particularly limited. For example, it can be obtained by adding a dopant and an oxidizing agent to a thiophene derivative and aldehyde, and heating and stirring them in a solvent under an inert gas atmosphere to polymerize. Further, a decomposition accelerator of an oxidizing agent may be added.

As the aldehyde, an aldehyde having an acid group may be used, and an aldehyde having an ester bond may be used. Examples of the aldehyde having an acid group include phthalaldehyde acid. Examples of the aldehyde having an ester bond include a compound obtained by esterifying the acid group of an aldehyde having an acid group. The esterification can be carried out, for example, by reacting an acid group with an epoxy group of an epoxy group-containing compound (for example, epoxyalkyl, silicone with an epoxy group at one end). When an aldehyde having an acid group is used, the conductivity tends to be high due to the stronger interaction between molecules.

The molar ratio of the dopant to the thiophene derivative, dopant/thiophene derivative, is, for example, 0.01 to 0.5, preferably 0.1 to 0.5. Specifically, the molar ratio is, for example, 0.01, 0.05, 0.1, 0.2, 0.3, 0.4, 0.5, and may be in the range between the two values exemplified herein. When this molar ratio is too small, the conductivity of the conductive polymer may become too low.

The oxidant is not particularly limited as long as it can proceed the polymerization reactions and Examples of the oxidant may include ammonium peroxodisulfate, potassium peroxodisulfate, sodium peroxodisulfate, iron chloride (III), iron sulfate (III), iron hydroxide.(III), iron tetrafluoroborate (III), hexafluorophosphoric acid iron (III), copper sulfate (II), copper chloride (II), copper tetrafluoroborate (II), hexafluorophosphoric acid copper (II), and organic peroxide such as ammonium oxodisulfate, benzoyl peroxide and lauroyl peroxideand.

The solvent is not particularly limited as long as the reaction between the heterocyclic compound and the aldehyde derivative proceeds. Example of the solvent may include γ-butyrolactone, propylene carbonate, ethylene carbonate, acetonitrile, tert-butyl methyl ether, ethyl acetate, benzene, anisole, heptane, water, an alcohol solvent such as methanol, ethanol, isopropyl alcohol, butanol, and a ketone solvent such as acetone, methyl ethyl ketone, methyl isobutyl ketone, cyclopentanone, and a glycol solvent such as methyl cellosolve, ethyl cellosolve, propylene glycol methyl ether, propylene glycol ethyl ether, and a lactic acid solvent such as methyl lactate and ethyl lactate. From the viewpoint of the efficiency of the oxidizing agent, an aprotic solvent is preferable.

### 1-3. solvent

The resin composition of the present invention may contain a solvent. The solvent is not particularly limited as long as it can dissolve or disperse the conductive polymer, and preferably contains an organic solvent. Examples of the organic solvent include alcohol solvents such as methanol, ethanol, isopropyl alcohol and butanol, ketone solvents such as acetone, methyl ethyl ketone, methyl isobutyl ketone and cyclopentanone, glycol solvents such as methyl cellosolve, ethyl cellosolve, propylene glycol methyl ether, propylene glycol ethyl ether, lactic acid solvents such as methyl lactate and ethyl lactate, toluene, anisol, ethyl acetate, propylene carbonate, γ-butyrolactone, toluene, isopropyl alcohol, ethylene glycol, dimethyl sulfoxide, methanol, benzyl alcohol and the like. Propylene carbonate, γ-butyrolactone, methyl ethyl ketone, toluene, anisole, isopropyl alcohol, ethylene glycol, dimethyl sulfoxide, methanol, benzyl alcohol and the like are particularly preferable. The organic solvent may be used in combination of a plurality of solvents, and may be the same as or different from the solvent used for synthesizing the conductive polymer.

In order to stably disperse the conductive polymer in water, excess sulfonic acid that does not contribute to doping is necessary. However when the conductive polymer composition contains an organic solvent, the conductive polymer can be stably dissolved or dispersed in the organic solvent even if the amount of excess sulfonic acid is small.

The non-volatile content obtained by removing the organic solvent from the conductive polymer composition is not particularly limited, and is, for example, 0.1% to 20.0% by mass. Specifically, it is 0.1, 0.5, 1.0, 1.5, 2.0, 2.5, 3.0, 5.0, 10.0, 15.0, 20.0 % by mass and may be within the range between any two of the numerical values exemplified here.

The solvent of the conductive polymer composition may include water in addition to the above organic solvent, and, from the viewpoint of substrate adhesion, the proportion of water with respect to the total solvent is preferably 50% or less, more preferably 10% or less.

### 1-4. Other components

The resin composition of the present invention may contain components such as a curing agent, a silane coupling agent, a silicone resin, a platinum catalyst, and a photopolymerization initiator. Further, the resin composition of the present invention may appropriately comprise a solvent, a tackifier resin, a cross-linking agent, a sensitizer, a filling material, a flame retardant, a filler, an organopolysiloxane compound, a plasticizer, a curing auxiliary catalyst, a dispersant, a pigment/dye, a viscosity modifier, a lubricant, a settling inhibitor, a rheology control agent, an ultraviolet absorber, a light resistance imparting agent, an antioxidant, a water repellent agent, an antifoaming agent and the like.

When the base resin is an acrylic resin, a curing agent and a silane coupling agent are preferably included.

### [Curing Agent]

When a hydroxyl or carboxyl group of (meth)acrylic monomer is presence, the curing agent causes a cross-linking reaction with the cross-linkable group in the structural units derived from other monomers to adjust the gel fraction. This may ensure good adhesion between the polarizing plate and its adherend, while the composition exhibits good flexibility and good durability when heated. Examples of the cross-linkable group include a hydroxyl group, a carboxyl group, an epoxy group, an amino group, an amide group, a tertiary amino group and the like.

The curing agent is not particularly limited as long as it can cause a crosslinking reaction with the (meth) acrylic resin, and examples thereof include isocyanate-based curing agents, metal chelate-based curing agents, and epoxy-based curing agents.

Specific examples of the isocyanate-based curing agent include isocyanate monomers such as tolylene diisocyanate, chlorphenylene diisocyanate, hexamethylene diisocyanate, tetramethylene diisocyanate, isophorone diisocyanate, xylylene diisocyanate, diphenylmethane diisocyanate, and hydrogenated diphenylmethane diisocyanate.; isocyanate compounds obtained by adding these isocyanate monomers to trimethylolpropane or the like; isocyanurate compounds; biuret type compounds; further, urethane prepolymer-type isocyanates obtained by an addition reaction with known polyether polyols, polyester polyols, acrylic polyols, polybutadiene polyols, polyisoprene polyols, or the like.

Examples of the metal chelate-based curing agent include compounds in which isopropyl alcohol, acetylacetone, ethyl acetoacetate or the like are coordinated with a polyvalent metal such as aluminum, iron, copper, zinc, tin, titanium, nickel, antimony, magnesium, vanadium, chromium and zirconium.

Specific examples thereof include aluminum isopropylate, diisopropoxybisacetylacetone titanate, and aluminum triethylacetoacetate.

Specific examples of the epoxy-based curing agent include ethylene glycol glycidyl ether, polyethylene glycol diglycidyl ether, glycerin diglycidyl ether, glycerin triglycidyl ether, 1,3-bis (N, N-diglycidylaminomethyl) cyclohexane, and N, N, N', N'-tetraglycyl-m-xylylenediamine, N, N, N', N'-tetraglycidylaminophenylmethane, triglycidyl isocyanurate, m-N, N-diglycidylaminophenylglycidyl ether, N, N-diglycidyl toluidine and N, N-diglycidyl aniline.

The curing agent described above may be used alone or in combination of two or more. The adhesive composition contains 0.01 to 10.0 parts by mass of such a curing agent with respect to 100 parts by mass of the acrylic resin.

### [Silane coupling agent]

The silane coupling agent forms a bond such as a chemical bond with various adherends and enhances the adhesiveness between the substrates and the adherend. It is especially effective for adhesion to glass substrates.

Examples of the silane coupling agent include polymerizable unsaturated group-containing silicon compounds such as vinyltrimethoxysilane, vinyltriethoxysilane and metharoxypropyltrimethoxysilane; silicon compounds having an epoxy structure such as 3-glycidoxypropyltrimethoxysilane, 3-glycidoxypropylmethyldimethoxysilane and 2-(3,4-epoxycyclohexyl)ethyltrimethoxysilane; amino group-containing silicon compounds such as 3-aminopropyltrimethoxysilane, N-(2-aminoethyl)3-aminopropyltrimethoxysilane, N-(2-aminoethyl)-3-aminopropylmethyldimethoxysilane and 3-chloropropyltrimethoxysilane; oligomer-type silane coupling agents.

The blending amount of the silane coupling agent is usually 0.01 to 0.3 parts by mass, preferably 0.05 to 0.25 parts by mass, with respect to 100 parts by mass of the acrylic resin. Further, the silane coupling agent may be used alone or in combination of two or more.

When the base resin is a rubber-based resin, the silane coupling agent is preferably contained. The silane coupling agent forms a bond such as a chemical bond with various adherends and enhances the adhesiveness between the substrates and the adherend. It is especially effective for adhesion to glass substrates.

Examples of the silane coupling agent include polymerizable unsaturated group-containing silicon compounds such as vinyltrimethoxysilane, vinyltriethoxysilane and metharoxypropyltrimethoxysilane; silicon compounds having an epoxy structure such as 3-glycidoxypropyltrimethoxysilane, 3-glycidoxypropylmethyldimethoxysilane and 2- (3,4-epoxycyclohexyl) ethyltrimethoxysilane; amino group-containing silicon compounds such as 3-aminopropyltrimethoxysilane, N- (2-aminoethyl) 3-aminopropyltrimethoxysilane, N-(2-aminoethyl)-3-aminopropylmethyldimethoxysilane and 3-chloropropyltrimethoxysilane; oligomer-type silane coupling agents.

The blending amount of the silane coupling agent is usually 0.01 to 0.3 parts by mass, preferably 0.05 to 0.25 parts by mass, with respect to 100 parts by mass of the rubber-based resin. Further, the silane coupling agent may be used alone or in combination of two or more.

When the base resin is a urethane resin, a curing agent is preferably contained. This improves the mechanical strength of the resin.

Specific examples of the curing agent include isocyanate monomers such as tolylene diisocyanate, chlorphenylene diisocyanate, hexamethylene diisocyanate, tetramethylene diisocyanate, isophorone diisocyanate, xylylene diisocyanate, diphenylmethane diisocyanate, and hydrogenated diphenylmethane diisocyanate.; isocyanate compounds obtained by adding these isocyanate monomers to trimethylolpropane or the like; isocyanurate compounds; biuret type compounds; further, urethane prepolymer-type isocyanates obtained by an addition reaction with known polyether polyols, polyester polyols, acrylic polyols, polybutadiene polyols, polyisoprene polyols, or the like.

The blending amount of the curing agent is usually 0.1 to 30 parts by mass, preferably 1 to 20 parts by mass, and more preferably 5 to 15 parts by mass with respect to 100 parts by mass of the urethane resin. Further, the curing agent may be used alone or in combination of two or more.

When the base resin is a silicone, it preferably contains a silicone resin and a catalyst, particularly a platinum catalyst.

The silicone resin imparts adhesiveness to the silicone adhesive. Examples thereof include a silicone resin having a highly three-dimensionally crosslinked network structure, a silicone resin having a structure containing a plurality of OH groups and methyl groups bonded to Si atoms, and the like, for example, an MQ resin comprising an M unit, which is a monofunctional siloxane unit [(CH₃)₃SiO_{1/2}] and a Q unit, which is a tetrafunctional siloxane unit [SiCO_{4/2}], can be used. The blending amount of the silicone resin is usually 1 to 30 parts by mass, more preferably 1 to 20 parts by mass with respect to 100 parts by mass of the silicone. Further, these may be used alone, or two or more of these may be used in combination.

The catalyst promotes the curing reaction of the addition reaction type silicone more efficiently. Examples thereof include fine particle platinum, fine particle platinum adsorbed on a carbon powder carrier, platinum chloride acid, alcohol-modified platinum chloride acid, an olefin complex of platinum chloride acid, palladium, rhodium and the like.

The blending amount of the catalyst is usually 0.01 to 5 parts by mass, preferably 0.1 to 3 parts by mass, with respect to 100 parts by mass of the silicon. Further, the catalyst may be used alone, or two or more of these may be used in combination.

### [Photopolymerization Initiator]

When the base resin is a photocurable resin, a photopolymerization initiator is preferably contained.

Specific examples of the photopolymerization initiator include 2-methyl-1- [4- (methylthio) phenyl] -2-morpholinopropane-1-one, 2-hydroxy-4'-hydroxyethoxy-2-methylpropiophenone, 4-phenoxydichloroacetophenone, 4-t-butyldichloroacetophenone, diethoxyacetophenone, 2-hydroxy-2-methyl-1-phenylpropan-1-one, 1- (4-isopropylenephenyl) -2-hydroxy- 2-methylpropane-1-one, 4- (2-hydroxyethoxy) -phenyl (2-hydroxy-2-propyl) ketone, 1-hydroshikicyclohexylphenyl ketone and the like. These may be used alone, or two or more of these may be used in combination. Among these, 2-hydroxy-4'-hydroxyethoxy-2-methylpropiophenone and 1-hydrosikicyclohexylphenylketone are preferred.

Further, when light is used as the polymerization starting means, the integrated irradiation amount is about 100 to 1,500 mJ/cm². When an ultraviolet rays is used as the polymerization starting means, ultraviolet rays having a wavelength of about 150 to 450 nm are used and it may be cured with an integrated irradiation amount of about 100 to 1,500 mJ/cm². If necessary, heating can be performed before irradiation with ultraviolet rays for complete curing. Further, when an electron beam is used as the polymerization initiator, it can be cured without using a photopolymerization initiator.

The photopolymerization initiator is a component added to accelerate the curing of the photocurable resin, and the upper limit of the content is not particularly limited but is preferably 0.1 to 20 parts by mass with respect to 100 parts by mass of the base resin.

The resin composition using the conductive polymer of the present invention can preferably form a resin composition having a low surface resistance value and haze. Here, the haze of the adhesive layer is preferably 3% or less, more preferably 2% or less, still more preferably 1% or less. When the resin film is formed to have a thickness of 25 µm, the surface resistance value of the resin layer is preferably smaller than 1×10¹³ Ω/□, and more preferably smaller than 1×10¹³ Ω/□. It is preferably less than 1×10¹² Ω/□, more preferably less than 1×10¹¹ Ω/□, and still more preferably less than 1×10¹⁰ Ω/□.

Since the resin composition using the conductive polymer of the present invention has a low haze, it is also preferably used in applications of electronic components such as optical members and FPDs. Further, by lowering the surface resistance value of the resin composition, it is possible to form a resin layer in which the generation of static electricity is reduced and to reduce contamination in which foreign substances such as dust and dirt adhere to the resin layer due to static electricity charging.

As described above, the conductive polymer of the present invention has high conductivity and has excellent dispersibility in various base resins, it can impart conductivity to various resins, and the obtained resin can be applied to various uses. When the conductive polymer of the present invention is blended with an acrylic resin having a low Tg (for example, <0°C) or a rubber-based resin, it can be used as the adhesive composition for optics and can be used is used for bonding a liquid crystal cell and a polarizing film that constitute an in-cell or on-cell touch panel type input/output device. When blended with a urethane resin and a silicone, it can be used as, for example, a surface protective adhesive. When blended with an olefin resin, a polyester resin, and an acrylic resin having a high Tg (for example, >30°C), it can be used as, for example, a conductivity-imparting agent for films, sheets, paints, automobiles, buildings, optics, medical care, electronics, packaging, container members.

As a liquid crystal cell constituting a touch panel type input/output device, an in-cell is a method of incorporating a touch panel function into a pixel of a liquid crystal display. On-cell is a method in which a touch panel function is built in between a color filter substrate and a polarizing plate.

In such a method, touch defects, in which the touch sensor does not work properly due to static electricity generated near the cover glass, often occur. Therefore, by using an adhesive having a low surface resistance value, which contains the conductive polymer of the present invention as a base resin, the adhesive layer can neutralize and disperse the static electricity generated near the cover glass and suppress the touch defects.

The invention is described in more detail in the examples but is not limited by these examples.

### EXAMPLES

### 1. Manufacturing of Conductive Polymer

Conductive polymers A to J were manufactured using the following method. A summary of the manufacturing conditions is shown in Table 1.

**[Table 1]**

| Table 1 | | conductive polymer | thiophen derivative | aldehyde | molar ratio | dopant modifier | |
|---|---|---|---|---|---|---|---|
| Example | 1 | A | EDOT | OFBA | 2/1 | DBS | epoxyhexane |
| | 2 | B | EDOT | OFBA | 1/1 | DBS | epoxyhexane |
| | 3 | C | EDOT | OFBA | 2/1 | methanesulfonic acid | epoxyhexane |
| | 4 | D | EDOT | OFBA | 2/1 | PTS | epoxyhexane |
| | 5 | E | 2-methyl-2,3-dihydrothieno [3,4-b] [1,4] dioxin | OFBA | 2/1 | DBS | epoxyhexane |
| | 6 | F | EDOT | OFBA | 2/1 | DBS | silicone with an epoxy group at one end |
| Comparative Example | 1 | G | EDOT | OFBA | 2/1 | DBS | no |
| | 2 | H | EDOT | benzaldehyde | 2/1 | DBS | no |
| | 3 | I | EDOT | butyl aldehyde | 2/1 | DBS | no |
| | 3 | J | PEDOT/PSS | | | | no |

### Example 1 (Manufacturing of Conductive Polymer A)

To a 1 L flask, 500 g of propylene carbonate, 3.4 g of 3,4-ethylenedioxythiophene (EDOT) and 3.0 g of dodecylbenzenesulfonic acid (DBS) were added, and the mixture was stirred for 0.25 hours. Then, under nitrogen purging, 0.04 g of iron (III) trisparatoluenesulfonate (Fe (PTS)₃), 1.8 g of phthalaldehyde acid (OFBA), 6.75 g of benzoyl peroxide, and 100 g of propylene carbonate were added, and the mixture was stirred at 40°C for 4 hours. Further, 1.25 g of DBS was added, and the mixture was stirred at 60°C for 2 hours. After adding 30 g of an anion exchange resin (Lewatit MP62WS, manufactured by Lanxess AG) substituted with propylene carbonate and stirring for 24 hours, the anion exchange resin was removed. The obtained product was treated with an ultrasonic homogenizer, prepared with propylene carbonate, and a propylene carbonate dispersion of a conductive polymer (a non-volatile content of 1.0% by mass) mainly containing a structural unit represented by the general formula (1).

Next, 1.2 g of epoxy hexane was added to the dispersion, and the mixture was stirred at 80°C for 6 hours to react the carboxyl group of the conductive polymer with the epoxy group of the epoxy hexane, and a dispersion liquid of the alkyl-modified conductive polymerA was obtained.

R¹ of the conductive polymers A to E is represented by the general formula (5).

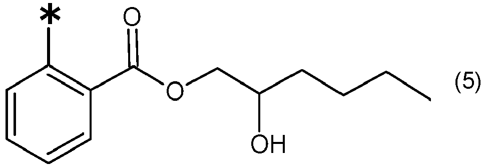

### Example 2 (Manufacturing of Conductive Polymer B)

A dispersion of the conductive polymer B was obtained by the same method as in Example 1 except that the amount of propylene carbonate to be initially added to 1 L flask was 400 g and the amount of OFBA was 3.6 g. The conductive polymer B mainly contains a structural unit represented by the general formula (2).

### Example 3 (Manufacturing of Conductive Polymer C)

The dispersion of the conductive polymer C was obtained in the same manner as in Example 1 except that 3.0 g of DBS initially added and 1.25 g of DBS then added in Example 1 were changed to 0.84 g of methanesulfonic acid initially added and 0.35 g of methanesulfonic acid then added.

### Example 4 (Manufacturing of conductive polymer D)

The dispersion of the conductive polymer D was obtained in the same manner as in Example 1 except that 3.0 g of DBS initially added and 1.25 g of DBS then added in Example 1 were changed to 1.5 g of p-toluenesulfonic acid (PTS) initially added and 0.63 g of p-toluenesulfonic acid (PTS) then added.

### Example 5 (Manufacturing of Conductive Polymer E)

The dispersion of the conductive polymer E was obtained in the same manner as in Example 1 except that 3.4 g of EDOT initially added in Example 1 was changed to 3.8 g of 2-methyl-2,3-dihydrothieno [3,4-b] [1,4] dioxin initially added.

### Example 6 (Manufacturing of Conductive Polymer F)

The dispersion of the conductive polymer F was obtained in the same manner as in Example 1 except that 1.2 g of epoxy hexyl used for modification in Example 1 was changed to 56.4g of silicone with an epoxy group at one end ("X-22-173DX", manufactured by Shin-Etsu Chemical Co., Ltd.). In the conductive polymer F, the carboxyl group contained in the conductive polymer before modification is silicone-modified by reacting with the epoxy group of X-22-173DX.

R¹ of the conductive polymer F is represented by the general formula (6).

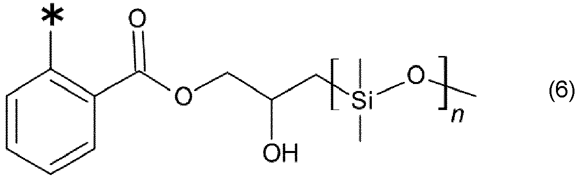

### Comparative Example 1 (Manufacturing of Conductive Polymer G)

A dispersion of the conductive polymer G was obtained by the same method as in Example 1 except that the alkyl modification was not performed in Example 1.

### Comparative Example 2 (Manufacturing of Conductive Polymer H)

A dispersion of the conductive polymer H was obtained by the same method as in Comparative Example 1 except that 1.8 g of OFBA added in Comparative Example 1 was changed to 1.3 g of benzaldehyde.

### Comparative Example 3 (Manufacturing of Conductive Polymer I)

A dispersion of the conductive polymer I was obtained by the same method as in Comparative Example 1 except that 1.8 g of OFBA added in Comparative Example 1 was changed to 0.86 g of butyraldehyde.

### Comparative Example 4 (Manufacturing of Conductive Polymer J)

To a 2 L three-necked flask equipped with a stirrer and an internal thermometer, 868 g of deionized water and 330 g of a polystyrene sulfonic acid aqueous solution having an average molecular weight of 70000 and a solid content of 3.8% by mass were added. The reaction temperature was maintained at 20 to 25°C. 5.1 g of 3,4-ethylenedioxythiophene was added with stirring. The solution was stirred for 30 minutes. Next, 0.03 g of iron (III) sulfate (Fe₂(SO₄)₃) and 9.5 g of sodium persulfate were added, and the solution was stirred for another 24 hours. After completion of the reaction, 100 mL of a strong acid cation exchanger and 250 mL of a weakly basic anion exchanger were added, and the solution was stirred for an additional 2 hours. The ion exchanger was removed by filtration. The obtained dispersion was treated with an ultrasonic homogenizer. Then, the dispersion was concentrated to obtain a dispersion of a conductive polymer J (PEDOT: PSS) (non-volatile content of 1.6%).

### 2. Manufacturing of Acrylic Resin 1 and Urethane Resin Manufacturing Example 1 (Manufacturing of Acrylic Resin 1)

To a reactor equipped with a stirrer, a reflux condenser, a thermometer and a nitrogen introduction tube, butyl acrylate: 77 parts by mass, benzyl acrylate: 20 parts by mass, and 2 hydroxyethyl acrylate: 3 parts by mass was charged and then ethyl acetate was charged in an amount of 50% by mass of the monomer concentration. Next, 0.1 part by mass of 2,2'-azobisisobutyronitrile was added with respect to 100 parts by mass of the total monomer components, and the mixture was stirred while replacing the air in the reaction vessel with nitrogen gas to raise the temperature to 60°C. Then the mixture was reacted for 4 hours. After completion of the reaction, the mixture was diluted with ethyl acetate to obtain a (meth) acrylic resin solution (non-volatile content of 15%). The weight average molecular weight of this acrylic resin was 1,600,000.

### Manufacturing Example 2 (Manufacturing of Urethane Resin)

To a reactor equipped with a stirrer, a reflux condenser, a thermometer and a nitrogen introduction tube, 170 parts of trifunctional polypropylene glycol ("ADEKA polyether AM-502" manufactured by ADEKA Corporation), 60 parts of polytetramethylene ether glycol ("PTMG1500" manufactured by Mitsubishi Chemical Corporation) and 15 parts of hexamethylene diisocyanate (manufactured by Tosoh Corporation) were added, 0.1 part of dibutyltin dilaurate as a catalyst and 150 parts of toluene were charged. The temperature was gradually raised to 80°C and the reaction was carried out for 4 hours. After confirming the disappearance of the isocyanate group by infrared spectroscopic analysis, the mixture was cooled to obtain a urethane resin solution (non-volatile content of 60%). The number average molecular weight of this urethane resin was 18,000.

### 3. Manufacturing of Resin Composition

Each resin composition for evaluation was manufactured by mixing each component shown in Tables 2 to 5 with the formulation shown in Tables 2 to 5. The conductive polymers and the base resins were mixed in the state of the dispersions or solutions obtained in the above Examples, Comparative Examples, and Manufacturing Examples. The amount of the conductive polymer added indicates the mass part with respect to 100 parts by mass of solid content in the base resin. The resin compositions of Tables 4 to 5 contain components such as a curing agent, a silane coupling agent, a silicone resin, a platinum catalyst, and a photopolymerization initiator, which are generally added in various applications, and for these resin compositions, the results of evaluating the surface resistance value, dispersibility, and general physical properties in various applications are shown.

**[Table 2]**

| Table 2 | | Example | | | | | | | | |
|---|---|---|---|---|---|---|---|---|---|---|
| | | 7 | 8 | 9 | 10 | 11 | 12 | 13 | 14 | 15 |
| conductive polymer | type | A | | | B | C | D | E | F | A |
| | addition amount | 0.05 | 1.0 | 10.0 | 1.0 | 1.0 | 1.0 | 1.0 | 7.1 | 33.9 |
| acrylic resin1 | dispersity | A | A | A | A | A | A | A | A | B |
| | surface resistance value (Ω/□) | 3 × 10^11 | 5 × 10^9 | 4 × 10^6 | 8 × 10^10 | 2 × 10^10 | 2 × 10^10 | 8 × 10^9 | 7 × 10^8 | 6 × 10^6 |
| | haze (%) | 0.3 | 0.4 | 0.6 | 0.3 | 0.4 | 0.4 | 0.4 | 0.4 | 1.5 |
| rubber-based resin | dispersity | A | A | A | A | A | A | A | A | C |
| | surface resistance value (Ω/□) | 6 × 10^2 | 5 × 10^10 | 7 × 10^7 | 6 × 10^11 | 3 × 10^11 | 1 × 10^11 | 9 × 10^10 | 8 × 10^9 | 2 × 10^8 |
| | haze (%) | 0.8 | 0.9 | 1.1 | 0.8 | 0.9 | 0.9 | 0.9 | 0.9 | 2.0 |
| silicone | dispersity | A | A | A | A | A | A | A | A | C |
| | surface resistance value (Ω/□) | 7 × 10^12 | 2 × 10^10 | 2 × 10^7 | 3 × 10^11 | 1 × 10^11 | 4 × 10^11 | 8 × 10^10 5 × 10^9 | | 4 × 10^8 |
| | haze (%) | 0.7 | 0.8 | 0.9 | 0.7 | 0.8 | 0.8 | 0.8 | 0.8 | 2.0 |
| urethane resin | dispersity | A | A | A | A | A | A | A | A | B |
| | surface resistance value (Ω/□) | 2 × 10^11 | 3 × 10^9 | 2 × 10^6 | 2 × 10^10 | 9 × 10^9 | 6 × 10^10 | 9 × 10^9 | 4 × 10^8 | 1 × 10^6 |
| | haze (%) | 0.5 | 0.6 | 0.8 | 0.5 | 0.6 | 0.6 | 0.6 | 0.6 | 1.7 |
| olefin resin | dispersity | A | A | A | A | A | A | A | A | C |
| | surface resistance value (Ω/□) | 2 × 10^12 | 5 × 10^10 | 3 × 10^9 | 2 × 10^11 | 8 × 10^10 | 7 × 10^10 | 8 × 10^10 | 8 × 10^10 | 9 × 10^8 |
| | haze (%) | 0.3 | 0.4 | 0.6 | 0.5 | 0.5 | 0.6 | 0.4 | 0.4 | 3.2 |
| polyester resin | dispersity | A | A | A | A | A | A | A | A | C |
| | surface resistance value (Ω/□) | 4 × 10^12 | 3 × 10^10 | 5 × 10^9 | 3 × 10^10 | 6 × 10^10 | 2 × 10^10 | 9 × 10^10 | 3 × 10^10 | 7 × 10^8 |
| | haze (%) | 0.9 | 0.8 | 0.9 | 0.7 | 0.7 | 0.7 | 0.9 | 0.8 | 3.5 |

**[Table 3]**

| Table 3 | | Comparative Example | | | | |
|---|---|---|---|---|---|---|
| | | 5 | 6 | 7 | 8 | 9 |
| conductive polymer | type | G | H | I | J | - |
| | addition amount | 1.0 | 1.0 | 1.0 | 1.0 | - |
| acrylic resin1 | dispersity | C | C | B | C | - |
| | surface resistance value (Ω/□) | 2 × 10^10 | >10^14 | >10^4 | 6 × 10^11 | >10^14 |
| | haze (%) | 2.1 | 2.8 | 1.8 | 3.1 | 0.3 |
| rubber-based resin | dispersity | C | C | C | C | |
| | surface resistance value (Ω/□) | 4 × 10^11 | >10^14 | >10^4 | >10^14 | >10^14 |
| | haze (%) | 2.5 | 3.4 | 2.2 | 5.5 | 0.8 |
| silicone | dispersity | C | C | c | c | - |
| | surface resistance value (Ω/□) | 1 x 10^11 | >10^14 | >10^4 | >10^14 | >10^14 |
| | haze (%) | 2.3 | 3.1 | 2.0 | 4.9 | 0.7 |
| urethane resin | dispersity | C | C | B | C | - |
| | surface resistance value (Ω/□) | 2 × 10^9 | >10^4 | >10^4 | 2×10^11 | >10^14 |
| | haze (%) | 2.3 | 3.0 | 2.0 | 3.3 | 0.5 |
| olefin resin | dispersity | C | C | C | C | - |
| | surface resistance value (Ω/□) | 5 × 10^11 | >10^14 | >10^14 | >10^14 | >10^14 |
| | haze (%) | 2.1 | 3.5 | 4.2 | 5.5 | 0.2 |
| polyester resin | dispersity | C | C | C | C | - |
| | surface resistance value (Ω/□) | 9 × 10^11 | >10^4 | >10^4 | >10^14 | >10^14 |
| | haze (%) | 3.1 | 4.1 | 3.9 | 5.2 | 0.4 |

**[Table 4]**

| Table 4 | | Example | | | | | | | | | |
|---|---|---|---|---|---|---|---|---|---|---|---|
| | | 16 | 17 | 18 | 19 | 20 | 21 | 22 | 23 | 24 | 25 |
| conductive polymer | type | A | E | A | E | A | E | A | E | A | A |
| | addition amount | 1.0 | 1.0 | 1.0 | 1.0 | 1.0 | 1.0 | 1.0 | 1.0 | 1.0 | 1.0 |
| base resin | acrylic resin 1 | 100 | 100 | | | | | | | | |
| | acrylic resin 2 | | | | | | | | | | 100 |
| | rubber resin | | | 100 | 100 | | | | | | |
| | urethane resin | | | | | 100 | 100 | | | | |
| | silicone | | | | | | | 100 | 100 | | |
| | olefin resin | | | | | | | | | 100 | |
| other components | curing agent | 0.2 | 0.2 | | | 10 | 10 | | | | |
| | silane coupling agent | 0.2 | 0.2 | 0.2 | 0.2 | | | | | | |
| | silicone | | | | | | | 8.0 | 8.0 | | |
| | platinum catalyst | | | | | | | 1.3 | 1.3 | | |
| | photopolymerization initiator | | | | | | | | | | 5 |
| evaluation | heat durability | A | A | A | A | | | | | | |
| | moisture resistance and heat durability | A | A | A | A | | | | | | |
| | contaminant | | | | | A | A | A | A | | |
| | hygroscopic property | | | | | | | | | A | |
| | pencil hardness | | | | | | | | | | 3H |
| | surface resistance value (Ω/□) | 6 × 10^9 | 5 × 10^10 | 5 × 10^10 | 8 × 10^11 | 3 × 10^9 | 7 × 10^10 | 2 × 10^10 | 5 × 10^11 | 5 × 10^10 | 3 × 10^9 |
| | haze (%) | 0.4 | 0.4 | 0.9 | 0.9 | 0.6 | 0.6 | 0.8 | 0.8 | 0.4 | 0.9 |

**[Table 5]**

| Table 5 | | Comparative Example | | | | | |
|---|---|---|---|---|---|---|---|
| | | 10 | 11 | 12 | 13 | 14 | 15 |
| conductive polymer | type | G | G | G | G | G | G |
| | addition amount | 1.0 | 1.0 | 1.0 | 1.0 | 1.0 | 1.0 |
| base resin | acrylic resin 1 | ' 100 | | | | | |
| | acrylic resin 2 | | | | | | 100 |
| | rubber resin | | 100 | | | | |
| | urethane resin | | | 100 | | | |
| | silicone | | | | 100 | | |
| | olefin resin | | | | | 100 | |
| other components | curing agent | 0.2 | | 10 | | | |
| | silane coupling agent | 0.2 | 0.2 | | | | |
| | silicone resin | | | | 8.0 | | |
| | platinum catalyst | | | | 1.3 | | |
| | photopolymerization initiator | | | | | | 5 |
| evaluation | heat durability | C | C | | | | |
| | moisture resistance and heat durability | C | C | | | | |
| | contaminant | | | C | C | | |
| | hygroscopic property | | | | | A | |
| | pencil hardness | | | | | | 3H |
| | surface resistance value (Ω/□) | 4 × 10^8 | 7 × 10^9 | 2 × 10^9 | 1 × 10^11 | 5 × 10^11 | 7 × 10^11 |
| | haze (%) | 2.1 | 2.5 | 2.3 | 2.3 | 2.1 | 2.8 |

The details of the components described in the above table are as follows.
- acrylic resin 1: the resin manufactured in Production Example 1
- acrylic resin 2: "KAYARAD DPHA" manufactured by Nippon Kayaku Co., Ltd.
- rubber based resin: "SK Dyne 2563PS" manufactured by Soken Chemical & Engineering Co.,Ltd.
- urethane resin: the resin manufactured in Production Example 2
- silicone: "KS-847T" manufactured by Shin-Etsu Chemical Co., Ltd.
- olefin resin: cycloolefin resin "APL5014AL" (manufactured by Mitsui Chemicals, Inc.) dissolved in toluene so as to be 30% by mass before use
- polyester resin: polyester resin "VYLON 270" (manufactured by TOYOBO CO., LTD.) dissolved in toluene so as to be 30% by mass before use
- curing agent: "Coronate L" manufactured by Tosoh Co., Ltd.
- silane coupling agent: "KBM-403" manufactured by Shin-Etsu Chemical Co., Ltd.
- silicone resin: "SD-4584" manufactured by Dow Toray Co.,Ltd.
- platinum catalyst: "SRX 212 CATALYST" manufactured by Dow Toray Co.,Ltd.
- photopolymerization initiator: "Irgacure 184" manufactured by BASF SE

### 4. Manufacturing of Adhesive Sheet for Evaluation

When each base resin is acrylic resin 1, rubber-based resin, urethane resin, or silicone, each resin composition of Examples and Comparative Examples is applied to the peeling-treated surface of the polyester film and dried to obtain an adhesive sheet for evaluation with a thickness of 25 µm.

### 5. Manufacturing of Adhesive-Processed Polarizing Plate for Evaluation

The adhesive sheet for evaluation is attached to one side of a polarizing film (TAC (triacetyl cellulose) -PVA (polyvinyl alcohol) -TAC configuration) and then aged at 23°C, 50% RH for 7 days under a dark place to obtain an adhesive-processed polarizing plate for evaluation.

### 6. Manufacturing of Light-Cured Film for Evaluation

The resin composition of Example 25 was applied to the surface of the polyester film and cured with an ultraviolet irradiation device at an integrated irradiation amount of 870 mJ/cm² to obtain a light-cured film for evaluation having a thickness of 5 µm.

### 7. Evaluation

Each evaluation was performed according to the following criteria. The results are shown in Tables 2 to 5. Where the evaluation result is not described in the table, it means that the evaluation has not been performed.

### Dispersity

The presence or absence of agglomerates in the resin composition was visually confirmed and evaluated according to the following criteria.
A: There are no agglomerates.
B: There are some agglomerates.
C: There are many agglomerates.

### Surface resistance value

A voltage was applied from the adhesive layer side of the adhesive sheet for evaluation, and the surface resistance was measured in accordance with JIS-K-6911, using a resistivity meter (Hi-Rester) at an input voltage of 1000 V, in an atmosphere of a temperature of 23°C and a humidity of 50% RH.

### Haze

When each base resin was acrylic resin 1, rubber-based resin, urethane resin, or silicone, the substrate was peeled off from the adhesive sheet for evaluation, the adhesive layer was taken out and attached to transparent glass to prepare a test piece. The total light transmittance and haze of the adhesive layer were measured. When each base resin was olefin resin or polyester resin, a test piece with a thickness of 25 µm was prepared directly on transparent glass and the haze was measured. When the base resin was acrylic resin 2, the haze was measured using a light-cured film for evaluation as a test piece. The measurement was performed using a haze meter ("hm-150" manufactured by Murakami Color Research Laboratory). The haze of the transparent glass itself having no resin layer was 0.1%, and the haze of the polyester film itself was 1.2%.

### Heat Durability

The adhesive-processed polarizing plate for evaluation was attached to a 19 inch sized non-alkali-treated glass to obtain a test plate, which was allowed to stand in a test environment (80°C, dry) for 500 hours. Then the appearance change of foaming and tearing was visually confirmed and evaluated according to the following criteria.
A: There were no change in appearance of foaming and tearing.
C: There was a change in appearance of foaming and/or tearing.

### Moisture Resistance and Heat Durability

The adhesive-processed polarizing plate for evaluation was attached to 19 inch sized non-alkali-treated glass to obtain a test plate, which is allowed to stand in a test environment (60°C, 95% RH) for 500 hours. Then the appearance change of foaming and tearing is visually observed and evaluated according to the following criteria.
A: There were no changes in appearance of foaming and tearing.
C: There was a change in appearance of foaming and/or tearing.

### Contamination

The substrate was peeled off from the adhesive sheet for evaluation, the adhesive layer was taken out and attached to a glass plate, and then left in an environment of 60°C and 90% RH for 24 hours. Then, it was taken out in an environment 23°C and 50% RH and left for 30 minutes, and then the contamination was visually evaluated. The evaluation criteria are as follows.
A: There were no adhesive layer transfer to the glass plate.
B: The adhesive layer is slightly transferred to the glass plate.
C: The adhesive layer is transferred to the glass plate.

### Hygroscopic Property

After the film sheeted by the casting method was sufficiently dried, it was allowed to stand in an environment of 60°C and 90% RH for 24 hours. Then the weight increment was evaluated. The evaluation criteria are as follows.
A: <0.1% by mass
B: >0.1% by mass

### Pencil Hardness

The light-cured film for evaluation was evaluated according to JIS K5600 5-4 scratch hardness (pencil method).

## Claims

1. A conductive polymer comprising at least one of structural units represented by general formula (1) and (2), 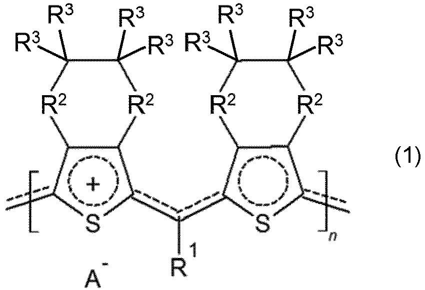 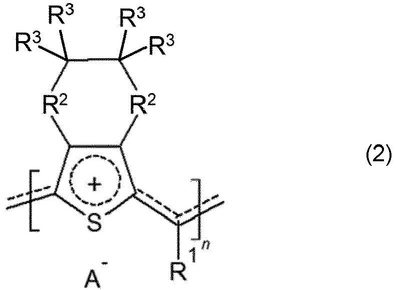 wherein, in general formulas (1) and (2), R¹ is a group having an ester bond, each of R² is an oxygen atom or a sulfur atom, each of R³ is a hydrogen atom or an organic group, A⁻ is a monoanion derived from a dopant, and n is 2 to 300.

2. The conductive polymer of Claim 1, wherein R¹ contains an alkyl group that optionally has a substituent.

3. The conductive polymer of Claim 1 or 2, wherein R¹ contains a silicone group.

4. The conductive polymer of any one of Claims 1 to 3, wherein the ester bond is a carboxylic acid ester bond.

5. The conductive polymer of any one of Claims 1 to 4, wherein R¹ has a structure represented by general formula (3), 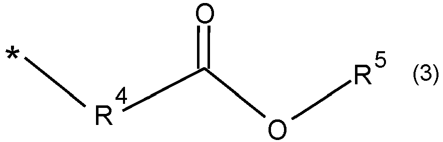 in general formula (3), * is a bonding part, R⁴ is a direct bond or an organic group, and R⁵ contains at least one of an organic group and a silicone group.

6. The conductive polymer of Claim 5, wherein R⁴ is an aromatic group.

7. The conductive polymer of Claim 5, wherein R⁴ is an alkyl group that optionally has a substituent.

8. The conductive polymer of any one of Claims 1 to 7, wherein the dopant is a sulfonic acid.

9. A resin composition comprising the conductive polymer of any one of Claims 1 to 8 and a base resin.

10. The resin composition of Claim 9, wherein a blending amount of the conductive polymer is 0.01 to 35 parts by mass with respect to 100 parts by mass of the base resin.

11. The resin composition of Claim 9 or 10, wherein the base resin is an acrylic resin.

12. The resin composition of any one of Claims 9 to 11, wherein the resin composition is an adhesive composition for optics.

13. The composition of the resin composition of Claim 12, wherein the adhesive composition for optics is used for bonding a liquid crystal cell and a polarizing film that constitute an in-cell or on-cell touch panel type input/output device.
